# EUROPEAN PATENT APPLICATION

(11) **EP 1 444 877 A1**
(43) Date of publication of application: **11.08.2004**
(21) Application number: 03251910.0
(22) Date of filing: 26.03.2003
(51) Int. Cl.: A01B 1/22, B25G 3/18, F16B 7/04, B25G 3/16

(54) **A tool assembly and coupling thereof**

(30) Priority: 04.02.2003 US 358051
(71) Applicant: Liao, Dick, Bridgewater, MA 02324 (US)
(72) Inventor: Liao, Dick, Bridgewater, MA 02324 (US)
(74) Representative: Harrison Goddard Foote

(57) **Abstract**

A tool assembly includes a handle (100), a main tube (200) and an implement (300). The main tube has a slot (206) at one end and a detent (210) proximate to the slot. The detent is movable between an extended position and a retracted position and is biased toward the extended position. The handle has a handle tube. The implement includes an implement tube. Both the handle tube and the implement have a hole (120,320) and a crossmember (126,326) fixed onto the inner surface of the implement tube or the handle tube. The handle tube, the main tube, and the implement tube are so configured that when the main tube is inserted into the implement tube or the handle tube, the detent is secured within the hole of the implement tube or the handle tube and the crossmember of the implement tube or the handle tube rests against the slots of the main tube.

## Description

### Background of the Invention

The invention relates to a tool assembly, especially a tool assembly for loosening and cultivating soil, and a coupling therefor.

Assembled tools with two or more parts connected together are designed to save space and cost for shipment or to be easily repaired and replaced. The connecting points or area around are usually more vulnerable than the remaining parts of the assembly as they bear stress from the connected parts and transfer force applied to the tool assembly during use. In general, a tool for a particular purpose constantly receives stress at the same direction or about the same local area on the tool. When the connecting points are all positioned at such a same direction or at about same local area, they are easily worn out. This results in a tool assembly that is not as durable and efficient as an integrated tool.

### Summary of the Invention

The invention features a tool assembly for loosening and cultivating soil as durable and efficient as an integrated tool, but with reduced shipment space and cost, and simplified repair and replacement.

In one aspect, the invention provides a coupling between two tubes to be interconnected end to end and longitudinally in-line, the tubes forming components of a tool assembly; wherein,
the end of a first of the tubes is a close sliding fit in the end of a second of the tubes;
a slot is formed in the end of the first tube and a resiliently biased detent projects from its side;
a crossmember is disposed in the end of the second tube and a first hole is formed in its side; whereby,
when coupled together, the slot of the first tube seats on the crossmember of the second tube and the detent snaps into the hole.

Preferably, said crossmember has a central axis that is substantially perpendicular to that of said second tube; and said hole is spaced-apart from said crossmember along the length of said second tube.

Preferably, said hole has a central axis that is angled, perhaps at 90 degrees, from the central axis of said crossmember.

Preferably, said detent is movable between an extended position and a retracted position, and is biased towards said extended position. The detent may be biased by a reed, said reed having a first end connected with the inner surface of said first tube, a second end fixed onto said detent, and said first tube further comprising a detent hole that the detent can readily go through when moving between said retracted and said extended position.

Preferably, said second tube further comprises a second hole symmetrically positioned to said crossmember opposite said first hole. Said first hole and said second hole of said second tube may each share a central axis that is substantially perpendicular to that of said second tube and that of said crossmember. The or each hole can be nearer the end of the second tube than is the crossmember.

The invention also provides a tool assembly comprising a handle and main tube, a main tube and an implement, or, indeed, all three, and in which the coupling between each component is as defined above.

In one embodiment, the implement is a tine as disclosed in U.S. Patent No. 5,706,900. Likewise, the handle may be as disclosed in U.S. Patent No. 5,706,900.

In a different aspect, the invention also provides a handle, a main tube and implement incorporating the first or second or both (in the case of the main tube) the first and second tubes of the coupling defined above.

In this aspect, the main tube can be a short tube that can be used as a cover to connect with other correspondingly shaped parts of a tool assembly. The tool assembly can be assembled by connecting the parts covered by the short tubes.

Other advantages and features of the invention will be apparent from the following description and from the claims.

### Brief Description of the Drawing

Fig. 1 is an exploded perspective view of the tool assembly.
Fig. 2 is a perspective view of a handle of the tool assembly in Fig. 1.
Fig. 2A is a side view of the handle in Fig. 2 along line AA.
Fig. 2B is a diagrammatical partial cross-sectional view of the handle in Fig. 2A along line BB.
Fig. 3 is a perspective view of a tine of the tool assembly in Fig. 1.
Fig. 3A is a cross-sectional view of the tine of the tool assembly in Fig. 3 along line AA.
Fig. 4 is a cross-sectional detail view of the main tube of the assembled tool assembly of Fig. 1 along line A.
Fig. 4A is a top view of the main tube shown in Fig.1.
Fig. 5 is a perspective view of an embodiment of an assembled tool assembly.
Fig. 5A is a cross-sectional detail view of the assembled tool assembly taken substantially through a plane indicated by the section line A in Fig. 5.
Fig. 6 is a perspective view of another embodiment of an assembled tool assembly.

### Description of the Invention

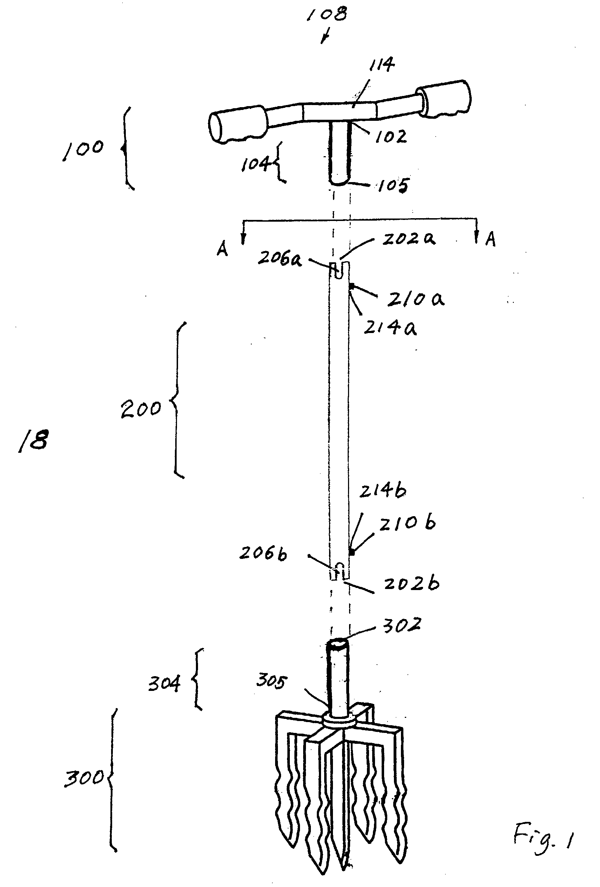

Referring to Fig. 1, an embodiment of a tool assembly 18 is shown. The tool assembly 18 includes a handle 100, a vertically disposed main tube 200 and an implement 300. The main tube 200 has two ends 202a and 202b that can be releasably connected to the handle 100 and the implement 300.

The main tube 200 can also be devised to connect various kinds of implements at one end and provide a suitable handgrip at the other end for a user to grasp the tool assembly and to apply a force to the implement 300 during operation. The implement 300 can be a tine as shown in Fig. 1, a spade, a rake, a trowel, a draw hoe, a digging fork etc.

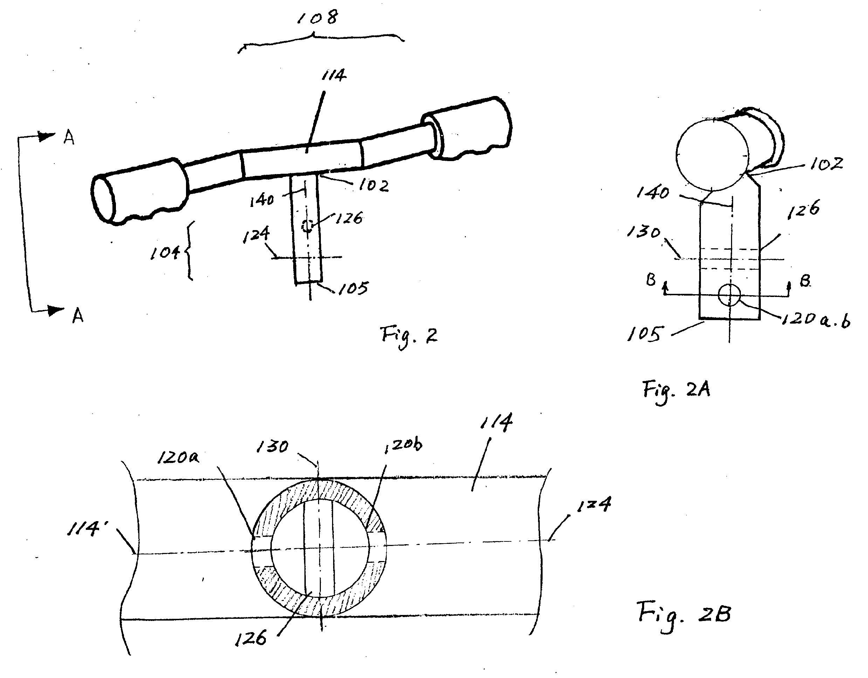

Fig. 2 illustrates an embodiment of a handle of the tool assembly. The handle 100 includes a handle tube 104 and a handle portion 108. The handle portion can be any of the embodiments disclosed in U.S. Patent No. 5,706,900 or otherwise known in the art. The handle portion 108 has a middle section 114 having a central axis 114'.

Referring to Fig. 2A and 2B, extending between the inner surfaces of the hand tube 104 is a crossmember 126. In a preferred embodiment, the axis 130 of the crossmember 126 is substantially perpendicular to the central axis 114' of the middle section 114 of the handle portion 108. The crossmember 126 is positioned such that the central axis 130 of the crossmember 126 is substantially perpendicular to a central axis 140 extending through the center of the handle tube 104. Spaced-apart from the crossmember 126 along the length of the handle tube 104 is two holes 120a and 120b. The holes 120a and 120b each share a central axis 124 that is substantially 90 degrees from the axis 130 of the crossmember 126. The central axis 124 of the holes 120a and 120b, however, can be oriented at various angles with respect to central axis 130 of the crossmember 126. The holes 120a and 120b are preferably positioned toward the lower end 105 of the handle tube 104 with respect to the crossmember 126. It should be noted that the holes 120a and 120b can also be positioned toward the handle portion 108. In other embodiments, the handle tube has a single hole or more than two holes.

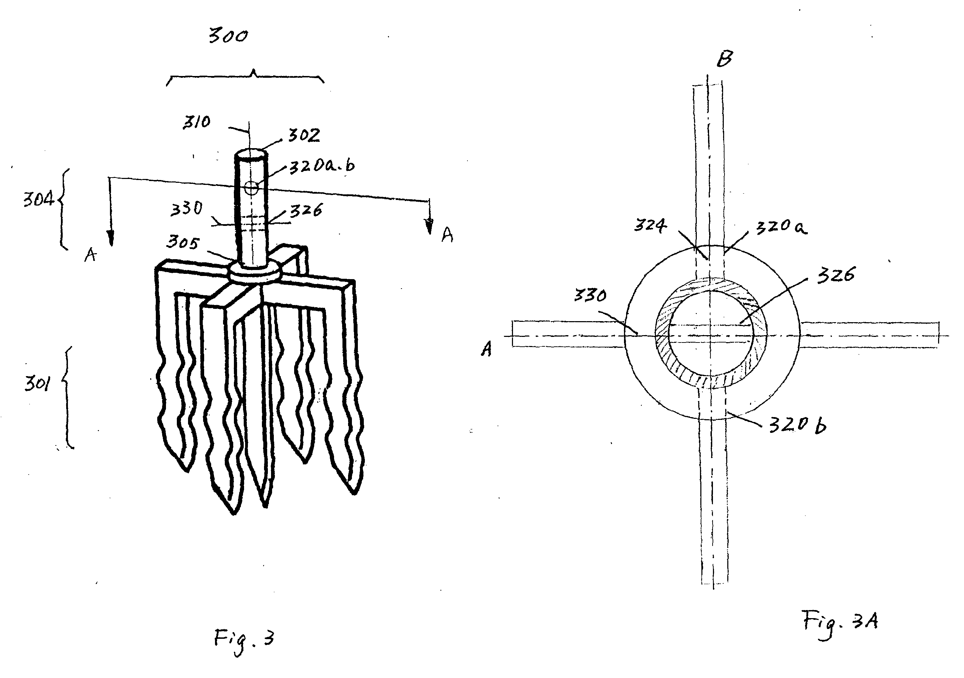

Referring to Fig. 3 and 3A, an embodiment of a tine 300 is shown. The tine 300 has a tine tube 304. A tine 301 is provided at the lower end 305 of the tine tube 304. The tine 300 can be any of the embodiments disclosed in U.S. Patent No.5,706,900.

Referring to Fig. 3A, a crossmember 326 is positioned across the inner surfaces of the tine tube 304. The central axis 330 of the crossmember 326 is preferably positioned such that the central axis 330 of the crossmember 326 is substantially perpendicular to a central axis 310 extending through the center of the tine tube 304. Spaced-apart from the crossmember 326 along the length of the tine tube 304 are two holes 320a and 320b each sharing a central axis 324. The central axis 324 of the holes 320a and 320b, can be oriented at various angles with respect to the central axis 330 of the crossmember 326. In a preferred embodiment, the angle is substantially 90 degrees from the axis 330 of the crossmember 326. The holes 320a and 320b are positioned toward the upper end 302 of the tine tube 304 with respect to the crossmember 326. However the holes 320a and 320b can also be positioned toward the tine portion 301. Preferably, the tine portion 301 has a pair of tines extending outwardly from the central axis 310 along Line A in opposite direction. Another pair of tines extends outwardly from the central axis 310 along Line B in opposite direction. Line A is substantially perpendicular to Line B. One of the axes of the crossmember 326 and hole 320 is substantially parallel with Line A. The other is substantially perpendicular to Line A, i.e. parallel with Line B. In other embodiments, there also can be a single hole or more than two holes.

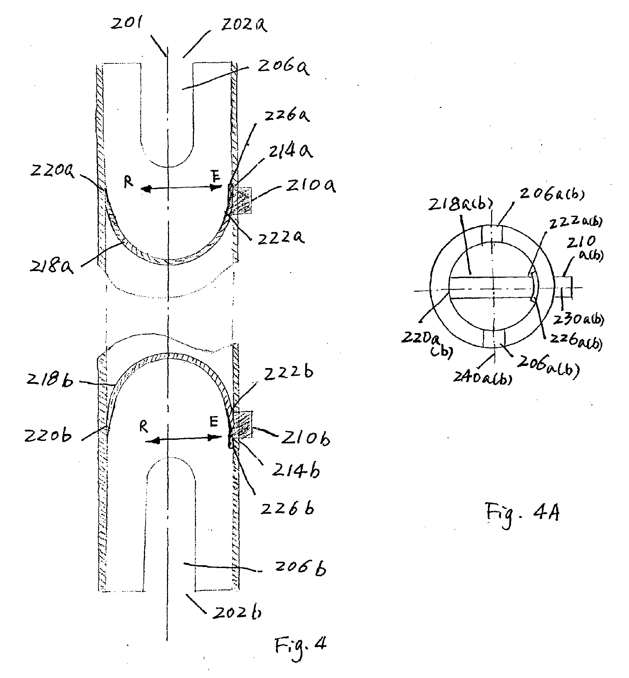

Referring to Fig. 4 and 4A regarding the main tube 200, slot 206a is formed at one end 202a of the main tube 200. Slot 206b is formed at the opposite end 202b of the main tube 200. Detent holes 214a and 214b are positioned close to slots 206a and 206b respectively along the length of the main tube 200. Detents 210a and 210b each have a slightly smaller diameter than that of the detent holes 214a and 214b, so that they can be moved readily through the detent holes 214a and 214b between a retracted position R and an extended position E.

Preferably, the central axes 240a and 240b of the slots 206a and 206b are substantially perpendicular to a central axis 201 extending through the center of the main tube 200. Spaced-apart from the slots 206a and 206b along the length of the main tube 200 are two detents 210a and 210b each sharing a central axis 230a and 230b. The central axes 230a and 230b of the detents 210a and 210b, can be oriented at various angles with respect to the central axis 240a and 240b of the slots 206a and 206b. In a preferred embodiment, the angle is substantially 90 degrees from the axis 240a and 240b of the crossmember 206a and 206b. The detents 210a and 210b are positioned respectively away from the end 202a and 202b of the main tube 200 with respect to the slots 206a and 206b. However the detents 210a and 210b can also be positioned toward the end 202a and 202b along the main tube 200. In other embodiments, there also can be two or more detents.

The main tube 200 includes reed 218a and 218b. The detent 210a and 210b are respectively biased by the tension of the reed 218a and 218b towards the extended position E. One end 220a and 220b of each reed 218a and 218b is connected onto the inner surface of the main tube 200. The other ends 222a and 222b are mounted onto the detents 210a and 210b. When a user presses the detent, the detent 210a and 210b can be readily moved towards the end 220a and 220b. When the reeds 218a and 218b are released, the detents extend outwardly from the outer surface of the main tube at the end 222a and 222b. There are portions 226a and 226b at the ends of the reeds 220a and 220b. The portions 226a and 226b have slightly bigger diameters than the detent holes 214a and 214b, such that the detent 210a and 210b can be stopped at the end 220a and 220b.

The movement of the reeds 218a and 218b is along a direction substantially perpendicular to the central axis 201 of the main tube 200.

The reeds 218a and 218b can be substantially U shaped, semicircular or V shaped or made by any technology known in the art, as long as it provides constant pressure to the detent 210a and 210b that maintains firmly extended outwardly from the outer surface. It prevents the rattling and looseness of the connection between the detent 210a and 210b and the holes 120a and 120b of the handle tube as well as holes 320a and 320b of the implement tube, especially, when a torque is applied about the axis of the tool assembly. If the reeds 218a and 218b are substantially V shaped, the lowest point of the V-shaped reed 218a and 218b need not be on the same vertical line as the central axis of the main tube. Preferably, it is away from the central axis along the diameter of the main tube 200 towards either of the ends 220a and 220b of the reeds 218a and 218b. The angle can vary according to the known technology in the art.

The detents 210a and 210b can be hollow. It can be molded or welded to the reeds 218a and 218b. The diameter of the detent 210a and 210b can be slightly smaller than that of the holes 320a and 320b of the implement tube 304 as well as the holes 120a and 120b of the handle tube 104. The ends 220a and 220b of the reeds 218a and 218b can simply lean against the inner surface of the main tube 200, or can be attached to another detent. This permits the reeds 218a and 218b to be readily pulled out for repair or replacement. Thus the reeds 218a and 218b can be easily repaired and replaced or are convenient for maintenance or cleaning.

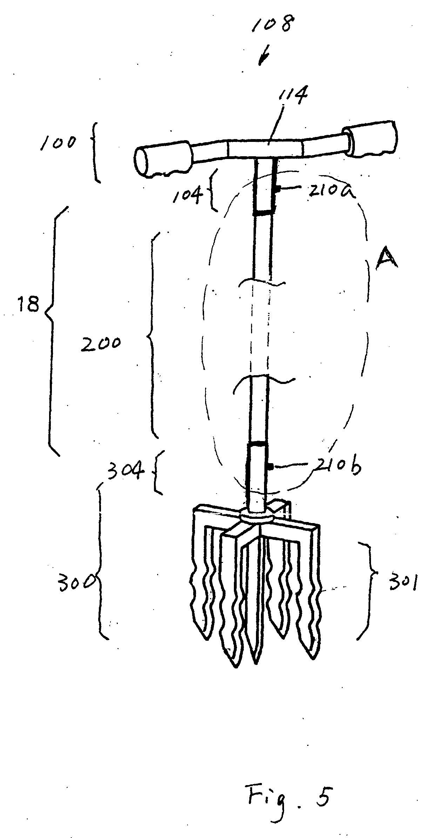

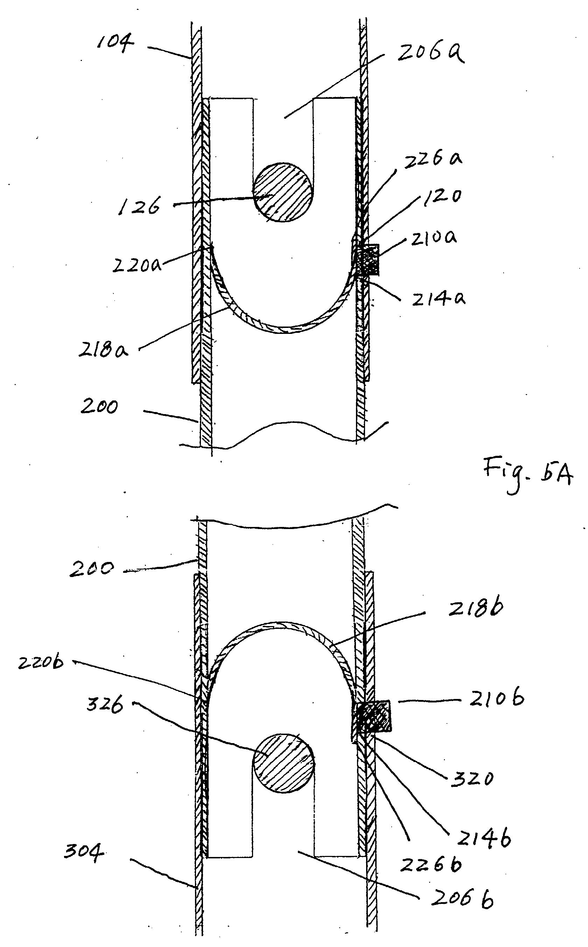

Referring to Fig. 5, an assembled tool assembly is shown. Fig. 5A shows more detail of inset A in Fig. 5. Slots 206a and 206b are adapted to snuggly receive corresponding shaped crossmember 126 of the handle tube and the crossmember 326 of the implement tube. The detents 210a and 210b are adapted to be fitted securely within the correspondingly shaped holes 120a or 120b of the handle tube and the holes 320a or 320b of the implement tube. Further, slots 206a and 206b, detents 210a and 210b, holes 120a and 120b, 320a and 320b, crossmembers 126 and 326 are so configured that when the tool assembly 18 is assembled, the crossmembers 126 and 326 snuggly sit against slots 206a and 206b while the detent 210a is firmly engaged within either of the holes 120a and 120b of the handle tube, and the detent 210b is firmly engaged within either of the holes 320a and 320b of the implement tube.

To connect the main tube 200 to the implement tube 302, a user presses the detent 210b inwardly to the inner surface of the main tube 200, inserts the main tube 200 into the implement tube 304 through the upper end 303 of the implement tube 304. The user releases the detent 210b when the crossmember 326 is received snuggly within the slot 202b and the detent 210b reaches the hole 320a or 320b of the implement tube 304. The reed 218b presses the detent towards the extended position E to allow it to be secured within the hole 320a or 320b of the implement tube 304.

To separate the main tube 200 from the implement tube 302, and user pushes the detent 210b into the main tube 200 to disengage the detent 210b from the hole 320a. Then the main tube 200 can be pulled out of the implement tube 302. The detent 210b moves back to the extended position under the pressure of the reed 218b. The tool assembly can be readily assembled and disassembled without any tools. The reeds 218b can be made from elastic materials know in the art, such as metal with certain strength. The same applies to the connection between the main tube 200 and the handle tube 100.

In Fig. 5 the main tube 200 is firmly connected with the implement tube 304 and handle tube 104. The slots 206a and 206b snuggly receive a respective one of the correspondingly shaped crossmembers 126 and 326, while the detent 210a is fitted securely within one of the correspondingly shaped holes 120a and 120b, and the detent 210b is fitted securely within one of the correspondingly shaped holes 320a and 320b.

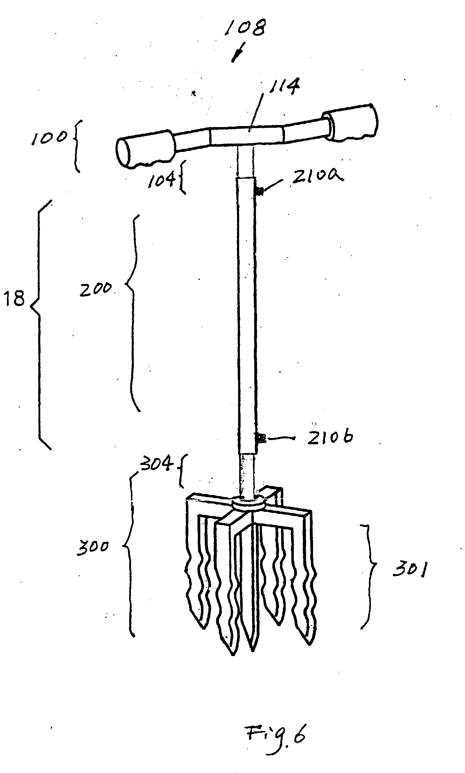

Fig. 6 shows another embodiment of a tool assembly 108, which is the reverse of the one shown in Fig. 1. That is to say, here the slots and detents are on the implement and handle tubes 304, 104 and the holes and crossmembers are on the main tube 200.

The holes 120a and 120b as well as 320a and 320b, each share a common central axis 124, 324 that is rotated, for example, by 90 degrees, with respect to the central axis 130, 330 of the crossmembers 126 and 326. Thus the holes 120a, 120b are not located along the same vertical line as the connection points of the crossmember 126 on the outer surface of the handle tube 104. Also the holes 320a and 320b are not located along the same vertical line as the connection points of the crossmember 326 of the implement tube 304. Further, the holes 120a and 120b are spaced apart from the crossmember 126 along the length of the handle tube 104. The holes 320a and 320b are spaced apart from the crossmemeber 326 of the implement tube along the length of the implement tube 304. That is to say, the holes 120a and 120b, and the holes 320a and 320b are not positioned at the same horizontal plane as the crossmembers 126 and 326. This orientation of the holes 120a, 120b and the holes 320a and 320b with the crossmembers 126 and 326 serves to distribute stresses exerted on the various components that result from a torque or a vertical force applied to the assembled tool 18 during use. Therefore, stress is spread over the handle tube, the implement tube and the main tube vertically and horizontally. This means that the tubes do not bear excessive stress at a specific point or a local area. The same also applies to the structure relating to the slots 206a, b and the detents 210a, b. They are respectively adapted to the correspondingly shaped and positioned crossmembers and holes. In this way, the tool assembly has better durability and maximizes the transfer of torque from the handle 100 to the tine 300.

At the same time, the connection between the crossmember and the slot as well as between the hole and the detent provide a double connection and force transferring mechanism. The crossmember and the slot furnish the first connection and force-applying mechanism. A torque can be applied easily about the axis of the tube through the connection of the crossmember and the slot. The hole and the detent provide a more secure connection between the two tubes as well as a force applying mechanism. In addition, the crossmember is substantially perpendicular to that of the middle section of the handle. This gives a user more leverage so as to readily apply a force, especially a torque about the central axis of the tube.

Same as the structure of the holes and the crossmembers, the detents 210a and 210b each share a common central axis 230a and 230b that is rotated, for example, by 90 degrees, with respect to the central axis 240a and 240b of the slots 206a and 206b. Thus the detents 210a and 210b are not located along the same vertical line as the connection points of the slots 206a and 206b on the outer surface of the main tube 200. Further, the detents 210a and 210b are spaced apart from the slots 206a and 206b along the length of the main tube 200, i.e. the detents 210a and 210b are not positioned at the same horizontal plane as the slots 206a and 206b. This orientation of the detents 210a and 210b and the slots 206a and 206b serves to distribute stresses exerted on the various components that result from a torque or vertical force applied to the assembled tool 18 during use. Therefore, stress is spread over the tubes vertically and horizontally, which means that the tubes do not bear excessive stress at a specific point or a local area. In addition, when the crossmembers 126 and 326 rest snuggly again the slots 206a and 206b, a downward force along the main tube 200 can also be efficiently transmitted. In this way, the tool assembly has better durability and maximizes the transfer of torque or a downward force from the handle 100 along the main tube 200 to the tine 300.

The tool assembly and any of its parts can also be easily replaced or repaired by removing or detaching the components and having those components individually repaired or replaced. For example, if the handle is broken, it can simply be detached from the tool assembly 18 and replaced or repaired. The tool assembly 18 functions after a user connects the repaired or replaced handle with the rest of the parts. The structure can also be provided on a smaller piece that can be readily connected to an end of a corresponding shaped parts of a tool assembly. For example, the main tube can be a short tube used as a cover. A user can simply attach a cover with the crossmember and the hole to an end of a component of a tool assembly and a cover with the slot and the detent to another component. The tool assembly is assembled by connecting the parts covered by the short tubes. This provides easy connection, flexibly arrangement and easy repair or replacement.

The tool assembly can be made of metal or any other suitable materials.

### OTHER EMBODIMENTS

All of the features disclosed in this specification may be combined in any combination. Each feature disclosed in this specification may be replaced by an alternative feature serving the same, equivalent, or similar purpose. Thus, unless expressly stated otherwise, each feature disclosed is only an example of a generic series of equivalent or similar features.

From the above description, one skilled in the art can easily ascertain the essential characteristics of the present invention, and without departing from the spirit and scope thereof, can make various changes and modifications of the invention to adapt it to various usages and conditions. Thus, other embodiments are also within the claims.

## Claims

1. A coupling between two tubes (100,200;200,300) to be interconnected end to end and longitudinally in-line, the tubes forming components of a tool assembly (18); wherein,
the end (105,302) of a first of the tubes is a close sliding fit in the end (202a,b) of a second of the tubes;
a slot (206a,b) is formed in the end of the first tube and a resiliently biased detent (210a,b) projects from its side;
a crossmember (126,326) is disposed in the end of the second tube and a first hole (120a,320a) is formed in its side; whereby,
when coupled together, the slot of the first tube seats on the crossmember of the second tube and the detent snaps into the hole.

2. A coupling as claimed in claim 1, wherein said crossmember has a central axis (130, 330) that is substantially perpendicular to that (140, 310) of said second tube; and said hole is spaced-apart from said crossmember along the length of said second tube.

3. A coupling as claimed in claim 1 or 2, wherein said hole has a central axis (124,324) that is angled from the central axis (130,330) of said crossmember.

4. A coupling as claimed in claim 3, wherein said central axis of said hole is substantially 90 degrees from the central axis of said crossmember.

5. A coupling as claimed in any preceding claim, wherein said detent is movable between an extended position and a retracted position, and is biased towards said extended position.

6. A coupling as claimed in claim 5, wherein said detent (210a,210b) is biased by a reed (218a,b), said reed having a first end (220a,b) connected with the inner surface of said first tube, a second end (222a,b) fixed onto said detent, and said first tube further comprising a detent hole (214a,b) that the detent can readily go through when moving between said retracted and said extended position.

7. A coupling as claimed in any preceding claim, wherein said second tube further comprises a second hole (120b, 320b) symmetrically positioned to said crossmember opposite said first hole (120a,320a).

8. A coupling as claimed in claim 7, wherein said first hole (120a,320a) and said second hole (120b,320b) of said second tube each share a central axis (324) that is substantially perpendicular to that (140,310) of said second tube and that (130,330) of said crossmember.

9. A coupling as claimed in any preceding claim, wherein the or each hole (120a,b,320a,b) is nearer the end of the second tube than is the crossmember (126,326).

10. A tool assembly comprising a main tube (200) and an implement (300) including an implement tube (304), wherein the main tube and the implement tube are detachably coupled by a coupling as claimed in any preceding claim.

11. The tool (300) assembly of claim 10, wherein said implement is a tine connected to a lower end (305) of said implement tube, and said tool assembly is a gardening tool.

12. The tool assembly of claim 11, wherein said tine (300) has a wavy profile along at least a part of its length (301) towards the end of said tine.

13. The tool assembly as claimed in claim 11 or 12, wherein the diameter of said tine is substantially constant along a substantial length of said tine.

14. The tool assembly as claimed in claim 11, 12 or 13, comprising a plurality of tines, each connected to said lower end of said implement tube and initially projecting outward from the longitudinal axis of said implement tube and, thereafter, extending in a direction away from said coupling and substantially parallel to said longitudinal axis of said implement tube.

15. The tool assembly of claim 14, wherein said tines project radially outward from the longitudinal axis of said implement tube.

16. The tool assembly as claimed in claim 14 or 15, wherein at least one of said tines has a length along said longitudinal axis of said implement tube that is different to the length along the longitudinal axis of said implement tube of another tine.

17. The tool assembly of claim 16, wherein each tine has a length along said longitudinal axis of said implement tube that is different to the length along said longitudinal axis of said implement tube of each of the remaining tines.

18. The tool assembly of any of claims 14 to 17, wherein at least one of said tines has a perpendicular distance from said implement tube that is different to a perpendicular distance between said implement tube and another tine.

19. The tool assembly of claim 18, wherein each tine has a perpendicular distance from said implement tube that is different than the perpendicular distance from said implement tube of each of the remaining tines.

20. The tool assembly as claimed in any of claims 14 to 19 further comprising a central tine connected to the lower end of said implement tube and extending away from said coupling along the longitudinal axis of said implement tube.

21. The tool assembly as claimed in any of claims 11 to 20, comprising a base plate through which said tine is connected to said lower end of said implement tube.

22. A tool assembly comprising a main tube (200) and a handle (100) including a handle tube (104), wherein the main tube and the handle tube are detachably coupled together by a coupling as claimed in any of claims 1 to 9.

23. The tool assembly of claim 22, wherein said handle (100) includes a middle section (114) which extends outward from an upper end (102) of said handle tube (104) in two opposite directions, and two end sections extending outward from terminal ends of the middle section, each end section having a longitudinal axis, said longitudinal axes (140) of the end sections being substantially parallel to one another and lying in a plane that is substantially perpendicular to the longitudinal axis of said handle tube, said longitudinal axis of each end section further oriented such that neither axis is substantially tangential to an arc of any imaginary circle having said upper end of said handle tube as its center and lying in said plane, wherein said two end sections of said handle extend outward from terminal ends of the middle section at obtuse angles.

24. The tool assembly of claim 23, wherein one of the axes (124,130) of said hole and said crossmember is substantially perpendicular to said axis of said middle section (114) of said handle.

25. A combination tool assembly comprising the tool assembly of any of claims 10 to 21 in combination with the tool assembly of any of claims 22 to 25, wherein either:
said main tube (200) is, together with said handle (100) and implement (300), a third component of the combination tool assembly, the implement tube (304) being coupled to one end (202b) of said main tube and the handle tube (104) being coupled to the other end (202a) of said main tube; or
the handle (100) is connected directly to the implement (300) and said main tube is constituted by the other of said handle or implement respectively.

26. A handle (100) for imparting torque about the longitudinal axis of a connected tube (200) of a tool assembly (18), said handle including:
a handle tube (104) having a lower end (105) that comprises the first or second tube of the coupling defined in any of claims 1 to 9.

27. The handle of claim 26, further comprising any of the features of the handle of the tool assembly claimed in claim 23 or 24.

28. A tube (200) comprising the first or second tube of the coupling defined in any of claims 1 to 9.

29. An implement (300) of a tool assembly including:
an implement tube (304) having a upper end (302) that comprises the first or second tube of the coupling defined in any of claims 1 to 9.

30. The implement of claim 29, further comprising any of the features of the implement of the tool assembly claimed in any of claims 11 to 21.

31. A tool assembly (18) comprising:
a main tube (200) having a first end (202b), a second end (202a), and a longitudinal axis, said main tube defining a first slot (206b) at said first end and including a first detent (210b) proximate to said slot, said first detent being movable between an extended position and a retracted position and being biased toward said extended position; and
an implement (300) including an implement tube (304) having a longitudinal axis, a lower end (305) and an upper end (302), said upper end defining a hole (320a) and including a crossmember (326) fixed onto an inner surface of said implement tube;
wherein said main tube (200) and said implement (300) tube are so configured that when said main tube is inserted into said implement tube, said first detent is secured within said hole of said implement tube and said crossmember rests against said first slot, whereby said main tube is securely connected to said implement tube.
